# EUROPÄISCHE PATENTSCHRIFT

(11) **EP 3 064 667 B1**
(45) Veröffentlichungstag und Bekanntmachung des Hinweises auf die Patenterteilung: **11.09.2024**
(21) Anmeldenummer: 16158711.8
(22) Anmeldetag: 04.03.2016
(51) Int. Cl.: E03F 5/04

(54) **DICHTMITTEL FÜR DIE ABDICHTUNG EINER ABLAUFVORRICHTUNG**
SEALANT FOR THE SEALING OF A DRAINING DEVICE
JOINT D'ETANCHEITE D'UN DISPOSITIF D'ECOULEMENT

(30) Priorität: 06.03.2015 DE 102015103342
(43) Veröffentlichungstag der Anmeldung: 07.09.2016
(73) Patentinhaber: Dallmer GmbH & Co. KG, 59757 Arnsberg (DE)
(72) Erfinder: Dallmer, Johannes, 59757 Arnsberg (DE)
(74) Vertreter: Basfeld, Rainer

(56) Entgegenhaltungen:
- EP-A1- 0 300 963
- EP-A2- 1 686 219
- DE-A1- 2 612 684
- DE-A1- 2 942 687
- DE-U1- 29 602 109
- DE-U1- 29 602 109

## Beschreibung

Die vorliegende Erfindung betrifft eine Ablaufeinrichtung für die Entwässerung eines Raumes gemäß dem Oberbegriff des Anspruchs 1.

Eine Ablaufvorrichtung ist aus der DE 26 12 684 A1 bekannt. Die darin beschriebene Vorrichtung zur Abdichtung der Ränder von Gullys umfasst einen Ablauftopf, von dessen Einlauföffnung sich ein flanschartiger Rand nach außen erstreckt. In dem flanschartigen Rand ist eine umlaufende Nut vorgesehen, in die ein Teil einer Gummidichtung einbringbar ist. Die Gummidichtung ist an ihrer radial äußeren Seite mit einer Dichtfolie verklebt. Dabei ist der radial innere Rand der Nut etwas von der Einlauföffnung beabstandet.

Eine weitere Ablaufvorrichtung ist aus der EP 0 300 963 A1 bekannt. Die darin beschriebene Ablaufvorrichtung umfasst Dichtmittel, die einen Stutzen und einen sich von der Oberseite des Stutzens radial nach außen erstreckende Dichtfolie aufweisen. Die Ablaufvorrichtung umfasst weiterhin einen Einlauftrichter, in den der Stutzen der Dichtmittel einbringbar ist.

Eine weitere Ablaufvorrichtung und eine Ablaufeinrichtung sind aus der EP 1 686 219 A2 bekannt. Die darin beschriebene Ablaufvorrichtung umfasst einen ringförmigen Flansch, von dem sich eine Dichtfolie nach außen erstreckt. Auf der Innenseite weist der Flansch einen Dichtungsring auf, der radial von außen an einem zylindrischen Ablaufkörper anliegen kann.

Eine weitere Ablaufvorrichtung und eine Ablaufeinrichtung der eingangs genannten Art sind aus der EP 2 423 395 A1 bekannt. Bei der darin beschriebenen Ablaufvorrichtung wird ein als Träger dienender Gummiring der Dichtmittel in die Ablauföffnung des Ablaufkörpers eingebracht und dort insbesondere durch den Ablaufstutzen der Wassersammelmittel, die als Ablaufrinne ausgebildet sind, gehalten.

Als nachteilig hierbei erweist sich, dass durch das Einbringen und Justieren des Ablaufstutzens der Gummiring beeinträchtigt, beispielsweise verschoben werden kann, so dass keine Dichtwirkung mehr eintritt. Außerdem ist keine nachträgliche Versetzung von in der Ablauföffnung angeordneten Geruchsverschlussmitteln möglich.

Das der vorliegenden Erfindung zugrunde liegende Problem ist die Schaffung einer Ablaufeinrichtung der eingangs genannten Art, die flexibler an unterschiedliche lokale Erfordernisse angepasst werden können und/oder die zuverlässiger abdichten können.

Dies wird durch die Ablaufeinrichtung gemäß Anspruch 1 erreicht. Die Unteransprüche betreffen bevorzugte Ausgestaltungen der Erfindung.

Gemäß Anspruch 1 ist vorgesehen, dass die Wassersammelmittel als Ablaufschiene ausgebildet sind, die einen Unterbaurahmen aufweist, und dass der Ablaufkörper auf seiner Oberseite eine Nut aufweist, in die der Verbindungsabschnitt der Dichtmittel zumindest abschnittsweise einbringbar ist, wobei die Nut die Öffnung des Ablaufkörpers umgibt und mindestens teilweise so beabstandet zu der Öffnung des Ablaufkörpers ist, dass zwischen der Öffnung des Ablaufkörpers und der Nut ein Zwischenraum ist, der zur Verschiebung des auf den Ablaufkörper aufgesetzten Unterbaurahmens dienen kann, wobei ein seitlicher Ausgleich des Unterbaurahmens in dem Zwischenraum senkrecht und parallel zur Wand des Raumes möglich ist.

Durch die Verschiebung ergibt sich die Möglichkeit der Anpassung an die lokalen Gegebenheiten. Weiterhin können in dem Zwischenraum zwischen der Nut und der Öffnung ein Geruchsverschlusseinsatz und ein Wechselrahmen für den Geruchsverschlusseinsatz angeordnet sein. Durch den Wechselrahmen kann der Geruchsverschluss in unterschiedlichen Positionen angeordnet werden, so dass auch dadurch die Anpassung an die lokalen Gegebenheiten ermöglicht wird.

Weiterhin erhöht die Anordnung des Trägers der Dichtung außerhalb der Öffnung die Verlässlichkeit der Dichtung. Dies insbesondere deshalb, weil bei Einbringung eines Stutzens in die Öffnung oder bei dem Einbringen und Herausnehmen des Geruchsverschlusses die Dichtmittel nicht berührt werden.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:

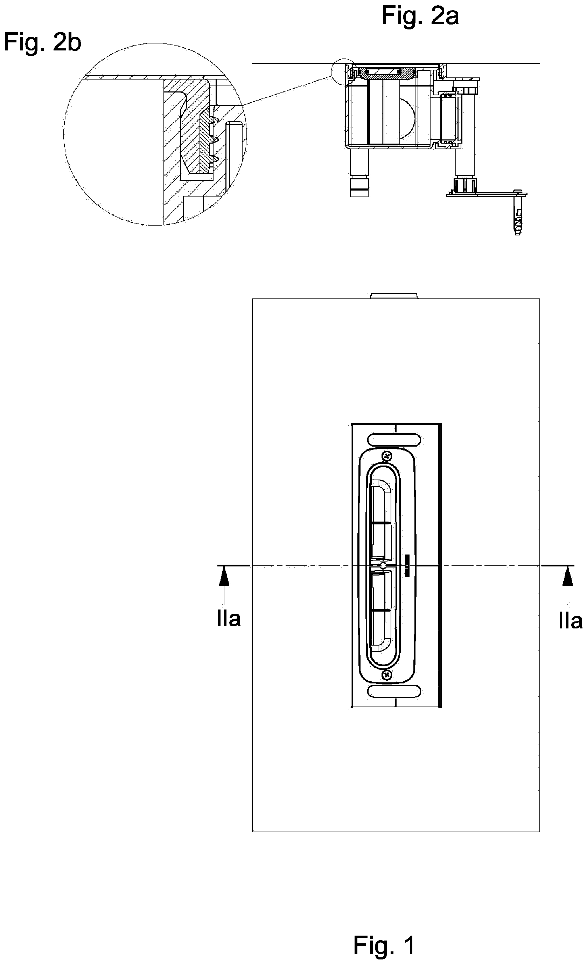

- Fig. 1: eine Draufsicht auf eine Ausführungsform einer Ablaufvorrichtung mit Dichtmitteln einer erfindungsgemäßen Ablaufeinrichtung;
- Fig. 2a: einen Schnitt gemäß den Pfeilen IIa - IIa in Fig. 1 ;
- Fig. 2b: ein Detail der Fig. 2a;

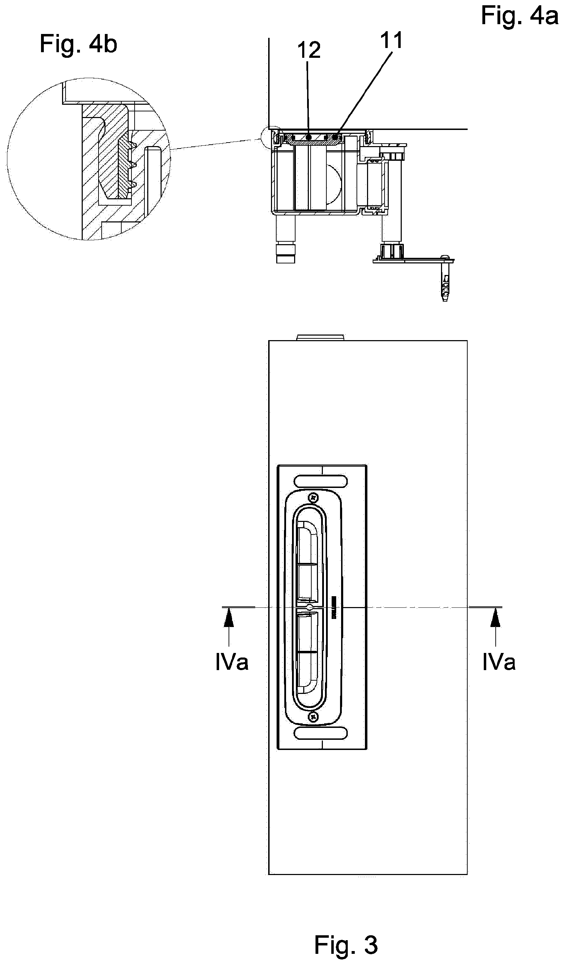

- Fig. 3: eine Draufsicht auf eine Ausführungsform einer Ablaufvorrichtung mit Dichtmitteln einer erfindungsgemäßen Ablaufeinrichtung;
- Fig. 4a: einen Schnitt gemäß den Pfeilen IVa - IVa in Fig. 3;
- Fig. 4b: ein Detail der Fig. 4a;
- Fig. 5: eine Draufsicht auf eine Ausführungsform einer Ablaufvorrichtung mit Dichtmitteln einer erfindungsgemäßen Ablaufeinrichtung;
- Fig. 6a: einen Schnitt gemäß den Pfeilen VIa - VIa in Fig. 5;
- Fig. 6b: ein Detail der Fig. 6a;
- Fig. 7 bis Fig. 12: Schnitte durch eine erfindungsgemäße Ablaufeinrichtung mit als Ablaufschiene ausgebildeten Wassersammelmitteln.

In den Figuren sind gleiche und funktional gleiche Teile mit gleichen Bezugszeichen versehen.

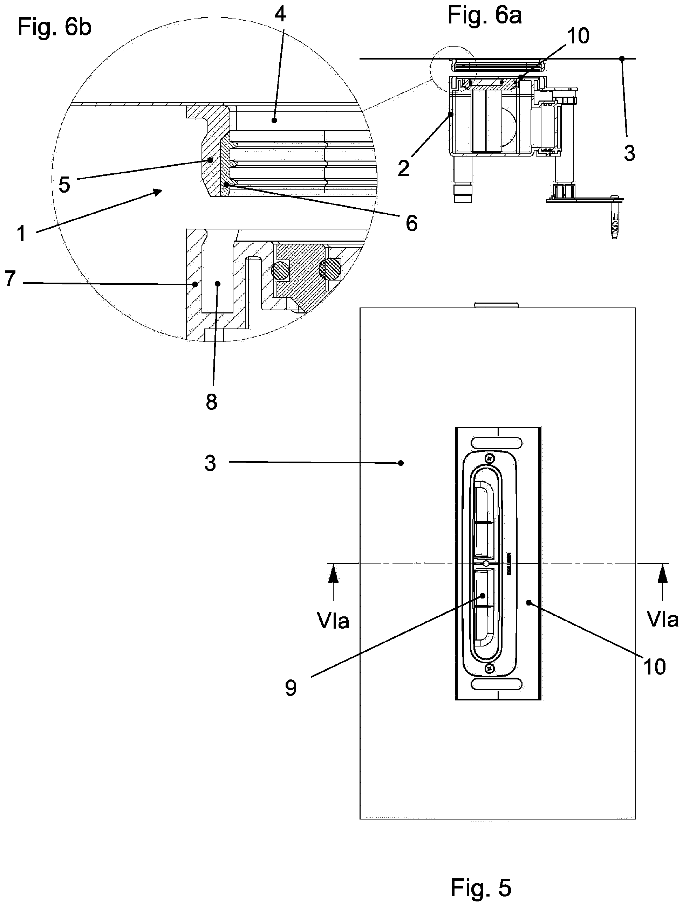

Fig. 6a, Fig. 6b und Fig. 5 zeigen ein Dichtmittel 1 vor der Anbringung an einem Ablaufkörper 2 einer Ablaufvorrichtung einer erfindungsgemäßen Ablaufeinrichtung. Das Dichtmittel 1 weist eine wasserdichte Dichtfolie 3 auf, die aus unterschiedlichen Kunststoffen bestehen kann. Die Dichtfolie 3 weist eine, insbesondere rechteckige (siehe Fig. 5), Öffnung 4 auf, durch die Wasser zu dem Ablaufkörper 3 fließen kann.

An der Unterseite der Dichtfolie 3 ist ein Träger 5 angebracht, der auf seiner der Öffnung 4 zugewandten Seite eine umlaufende Dichtung 6, insbesondere eine Lippendichtung aufweist. Der Träger 5 kann aus einem Hartkunststoff wie beispielsweise PP bestehen. Die Dichtung 6 kann aus einem Weichkunststoff wie beispielsweise TPE bestehen.

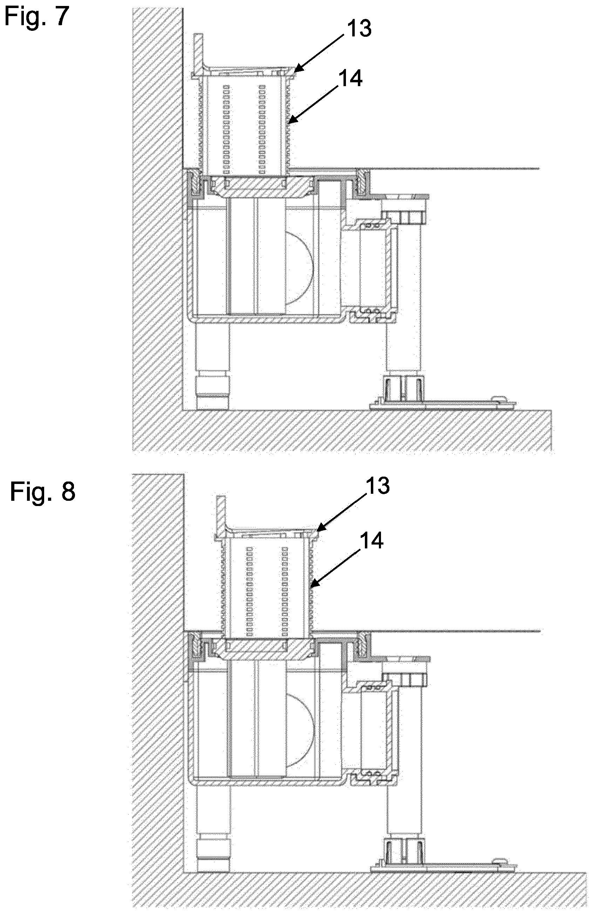

Der Ablaufkörper 2 ist als Ablaufgehäuse mit einem Gehäusedeckel 7 ausgebildet, der ebenfalls eine, insbesondere rechteckige (siehe Fig. 5), Öffnung 9 aufweist. In eine umlaufende Nut 8 des Gehäusedeckels kann der Träger 5 mit der Dichtung 6 eingebracht, vorzugsweise eingerastet oder eingeclipst werden. Zwischen der Nut 8 und der Öffnung 9 verbleibt ein Zwischenraum 10, der zur Verschiebung eines auf das Ablaufgehäuse aufgesetzten, als Unterbaurahmen 14 ausgebildeten Teils von Wassersammelmitteln dienen kann (siehe beispielsweise Fig. 7 und Fig. 8).

Weiterhin sind in dem Zwischenraum 10 zwischen der Nut 8 und der Öffnung 9 ein Geruchsverschlusseinsatz 11 und ein Wechselrahmen 12 für den Geruchsverschlusseinsatz 11 angeordnet.

Im eingebauten Zustand der Ablaufvorrichtung wird auf die Dichtfolie 3 eine Verbundabdichtung aufgebracht, auf die wiederum Fliesen aufgebracht werden können.

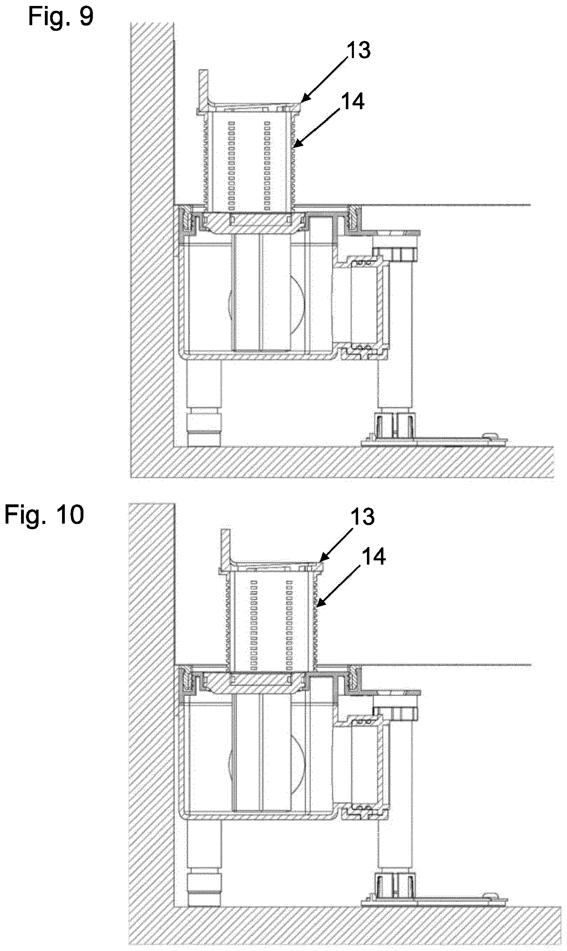

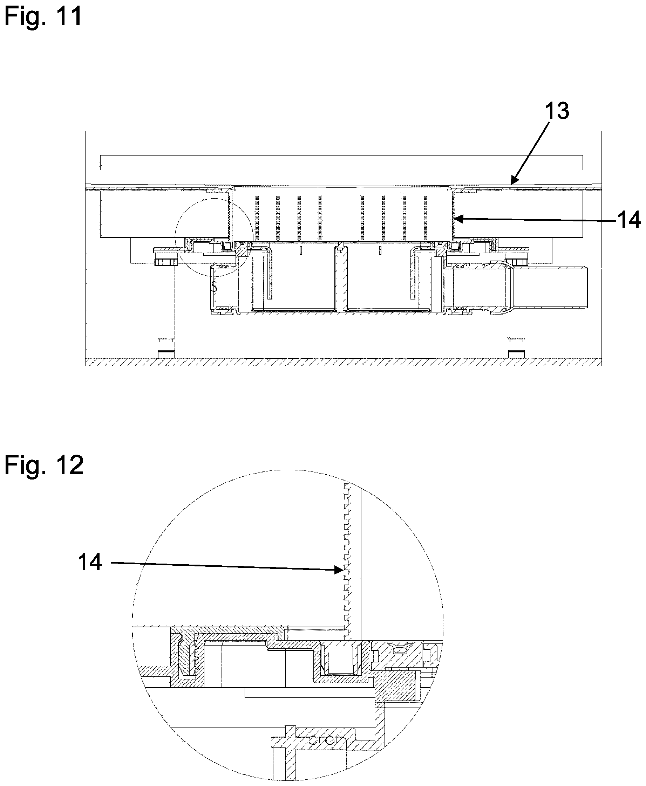

Die Fig. 7 bis 12 zeigen als Wassersammelmittel eine Ablaufschiene 13. Bei dieser ist ein seitlicher Ausgleich des Unterbaurahmens 14 innerhalb der Dichtmittel 1 beziehungsweise in dem Zwischenraum 10 senkrecht und parallel zur Wand möglich.

## Patentansprüche

1. Ablaufeinrichtung für die Entwässerung eines Raumes, umfassend
- Wassersammelmittel, die eine Öffnung aufweisen, durch die das gesammelte Wasser austreten kann,
- eine Ablaufvorrichtung für den zumindest teilweisen Einbau in den Boden eines Raumes, umfassend einen Ablaufkörper (2) mit einer Öffnung (9), durch die Wasser abfließen kann, sowie Dichtmittel (1), die eine flexible Dichtfolie (3) mit einer Öffnung (4) aufweisen, durch die Abwasser hindurchtreten kann, wobei die Dichtmittel (1) weiterhin einen Verbindungsabschnitt aufweisen, der mit der Dichtfolie (3) verbunden und mit einem Teil der Ablaufvorrichtung verbindbar ist, wobei die Dichtmittel (1) zumindest teilweise oberhalb des Ablaufkörpers (2) angeordnet sind, so dass durch die Öffnung (4) der Dichtfolie (3) hindurchgetretenes Wasser in die Öffnung (9) des Ablaufkörpers (2) eintreten kann, wobei das aus der Öffnung der Wassersammelmittel ausgetretene Wasser durch die Öffnung (4) der Dichtfolie (3) in die Öffnung (9) des Ablaufkörpers (2) eintreten kann,
**dadurch gekennzeichnet, dass** die Wassersammelmittel als Ablaufschiene (13) ausgebildet sind, die einen Unterbaurahmen (14) aufweist, und dass der Ablaufkörper (2) auf seiner Oberseite eine Nut (8) aufweist, in die der Verbindungsabschnitt der Dichtmittel (1) zumindest abschnittsweise einbringbar ist, wobei die Nut (8) die Öffnung (9) des Ablaufkörpers (2) umgibt und mindestens teilweise so beabstandet zu der Öffnung (9) des Ablaufkörpers (2) ist, dass zwischen der Öffnung (9) des Ablaufkörpers (2) und der Nut (8) ein Zwischenraum (10) ist, der zur Verschiebung des auf den Ablaufkörper (2) aufgesetzten Unterbaurahmens (14) dienen kann, wobei ein seitlicher Ausgleich des Unterbaurahmens (14) in dem Zwischenraum (10) senkrecht und parallel zu einer Wand des Raumes möglich ist.

2. Ablaufeinrichtung nach Anspruch 1, **dadurch gekennzeichnet, dass** der Zwischenraum (10) um die Öffnung (9) des Ablaufkörpers (2) umläuft.

3. Ablaufeinrichtung nach einem der Ansprüche 1 oder 2, **dadurch gekennzeichnet, dass** der Verbindungsabschnitt in der Nut (8) verrastbar oder in die Nut (8) einclipsbar ist.

4. Ablaufeinrichtung nach einem der Ansprüche 1 bis 3, **dadurch gekennzeichnet, dass** der Verbindungsabschnitt eine Dichtung (6) umfasst, die insbesondere als Lippendichtung ausgebildet ist.

5. Ablaufeinrichtung nach Anspruch 4, **dadurch gekennzeichnet, dass** die Dichtung (6) die Öffnung (4) der Dichtfolie (3) umgibt, wobei die Dichtung (6) insbesondere auf der der Öffnung (4) der Dichtfolie (3) zugewandten Seite abdichtet.

6. Ablaufeinrichtung nach einem der Ansprüche 4 oder 5, **dadurch gekennzeichnet, dass** der Verbindungsabschnitt einen Träger (5) umfasst, der die Dichtung (6) haltert.

7. Ablaufeinrichtung nach Anspruch 6, **dadurch gekennzeichnet, dass** die Dichtung (6) auf der der Öffnung (4) der Dichtfolie (3) zugewandten Seite des Trägers (5) angeordnet ist.

## Claims

1. Draining apparatus for draining a room, comprising
- water collection means which have an opening through which the collected water can flow out,
- a draining device for the at least partial installation in the floor of a room, comprising a draining body (2) having an opening (9) through which water can flow out, and sealing means (1) which have a flexible sealing film (3) having an opening (4) through which waste water can pass, wherein the sealing means (1) have furthermore a connection portion which is connected to the sealing film (3) and can be connected to a part of the draining device, wherein the sealing means (1) are arranged at least partially above the draining body (2) such that water passing through the opening (4) in the sealing film (3) can enter the opening (9) in the draining body (2), wherein the water flowing out from the opening of the water collection means can pass through the opening (4) in the sealing film (3) into the opening (9) of the draining body (2),
**characterised in that** the water collection means are designed as a draining rail (13) which has a foundation frame (14), and that the draining body (2) has a groove (8) on its top side into which the connection portion of the sealing means (1) can be introduced at least in some portions, wherein the groove (8) surrounds the opening (9) of the draining body (2) and is at least partially spaced from the opening (9) of the draining body (2) such that between the opening (9) of the draining body (2) and the groove (8) is an interspace (10) which can serve for displacing the foundation frame (14) set upon the draining body (2), wherein a lateral compensation of the foundation frame (14) is possible in the interspace (10) perpendicular and parallel to a wall of the room.

2. Draining apparatus according to claim 1, **characterised in that** the interspace (10) encircles the opening (9) of the draining body (2).

3. Draining apparatus according to any of claims 1 or 2, **characterised in that** the connecting portion can latch in the groove (8) or can be clipped into the groove (8).

4. Draining apparatus according to any of claims 1 to 3, **characterised in that** the connecting portion comprises a seal (6) which is in particular designed as a lip seal.

5. Draining apparatus according to claim 4, **characterised in that** the seal (6) surrounds the opening (4) of the sealing film (3), wherein the seal (6) seals in particular on the side facing the opening (4) of the sealing film (3).

6. Draining apparatus according to any of claims 4 or 5, **characterised in that** the connecting portion comprises a carrier (5) which holds the seal (6).

7. Draining apparatus according to claim 6, **characterised in that** the seal (6) is arranged on the side of the carrier (5) facing the opening (4) of the sealing film (3).

## Revendications

1. Dispositif d'évacuation pour le drainage d'une pièce, comprenant
- des moyens de collecte d'eau qui présentent une ouverture à travers laquelle l'eau collectée peut s'échapper,
- un dispositif d'évacuation pour le montage au moins partiel dans le sol d'une pièce, comprenant un corps d'évacuation (2) avec une ouverture (9) à travers laquelle de l'eau peut s'écouler, ainsi que des moyens d'étanchéité (1) qui présentent une feuille d'étanchéité flexible (3) avec une ouverture (4) à travers laquelle les eaux usées peuvent passer, dans lequel les moyens d'étanchéité (1) présentent en outre une section de connexion qui est connectée à la feuille d'étanchéité (3) et qui peut être connectée à une partie du dispositif d'évacuation, dans lequel les moyens d'étanchéité (1) sont disposés au moins partiellement au-dessus du corps d'évacuation (2), de sorte que de l'eau passée à travers l'ouverture (4) de la feuille d'étanchéité (3) peut entrer dans l'ouverture (9) du corps d'évacuation (2), dans lequel l'eau qui est sortie de l'ouverture des moyens de collecte d'eau peut entrer dans l'ouverture (9) du corps d'évacuation (2) à travers l'ouverture (4) de la feuille d'étanchéité (3),
**caractérisé en ce que** les moyens de collecte d'eau sont conçus en tant que rail d'écoulement (13) qui présente un cadre inférieur (14), et **en ce que** le corps d'écoulement (2) présente sur sa face supérieure une rainure (8) dans laquelle la section de connexion des moyens d'étanchéité (1) peut être introduite au moins par sections, dans lequel la rainure (8) entoure l'ouverture (9) du corps d'écoulement (2) et est au moins partiellement ainsi espacée de l'ouverture (9) du corps d'écoulement (2), **en ce qu'**il y a un espace intermédiaire (10) entre l'ouverture (9) du corps d'évacuation (2) et la rainure (8), qui peut servir au déplacement du cadre inférieur (14) placé sur le corps d'évacuation (2), dans lequel un équilibrage latéral du cadre inférieur (14) est possible dans l'espace intermédiaire (10) perpendiculairement et parallèlement à une paroi de la pièce.

2. Dispositif d'évacuation selon la revendication 1, **caractérisé en ce que** l'espace intermédiaire (10) fait le tour de l'ouverture (9) du corps d'évacuation (2).

3. Dispositif d'évacuation selon l'une quelconque des revendications 1 ou 2, **caractérisé en ce que** la section de connexion peut être enclenchée dans la rainure (8) ou clipsée dans la rainure (8).

4. Dispositif d'évacuation selon l'une quelconque des revendications 1 à 3, **caractérisé en ce que** la section de connexion comprend un joint d'étanchéité (6), qui est en particulier un joint à lèvre.

5. Dispositif d'écoulement selon la revendication 4, **caractérisé en ce que** le joint (6) entoure l'ouverture (4) de la feuille d'étanchéité (3), dans lequel le joint d'étanchéité (6) étanchéifie en particulier le côté tourné vers l'ouverture (4) de la feuille d'étanchéité (3).

6. Dispositif d'évacuation selon l'une quelconque des revendications 4 ou 5, **caractérisé en ce que** la section de connexion comprend un support (5) qui soutient le joint d'étanchéité (6).

7. Dispositif d'évacuation selon la revendication 6, **caractérisé en ce que** le joint d'étanchéité (6) est disposé sur le côté du support (5) tourné vers l'ouverture (4) de la feuille d'étanchéité (3).
